(19) Europäisches Patentamt

European Patent Office

Office européen des brevets

(11) **EP 1 036 458 B1**

(12) **EUROPEAN PATENT SPECIFICATION**

(45) Date of publication and mention
of the grant of the patent:
**13.11.2002   Bulletin 2002/46**

(51) Int Cl.⁷: **H04L 29/06**, H04L 12/26,
B60R 16/02

(21) Application number: **98958829.8**

(22) Date of filing: **07.12.1998**

(86) International application number:
**PCT/DK98/00530**

(87) International publication number:
**WO 99/030466 (17.06.1999 Gazette 1999/24)**

(54) **A COMMUNICATIONS PROTOCOL**

KOMMUNIKATIONSPROTOKOLL

PROTOCOLE DE COMMUNICATION

(84) Designated Contracting States:
**AT BE CH CY DE DK ES FI FR GB GR IE IT LI LU
MC NL PT SE**

(30) Priority: **08.12.1997   DK 141997
08.12.1997   US 987154**

(43) Date of publication of application:
**20.09.2000   Bulletin 2000/38**

(73) Proprietors:
• **LEGO A/S
7190 Billund (DK)**
Designated Contracting States:
**AT BE CH CY DE DK ES FI FR GR IT LU MC NL
PT SE LI**
• **INTERLEGO AG
6340 Baar (CH)**
Designated Contracting States:
**GB IE**

(72) Inventor: **S RENSEN, Bent
DK-7190 Billund (DK)**

(74) Representative: **Sigh, Erik et al
Hofman-Bang Zacco A/S
Hans Bekkevolds Allé 7
2900 Hellerup (DK)**

(56) References cited:
**EP-A1- 0 840 235        EP-A2- 0 396 090
EP-A2- 0 442 053        EP-A2- 0 482 953
EP-A2- 0 835 006        US-A- 5 734 329**

## Description

Field of the Invention

The present invention relates to the field of communication between a master unit and a slave unit, said slave unit being capable of executing a set of instructions downloaded from the master unit, in order to control some type of construction e.g. a semi-autonomous car.

Background of the Invention

The recent technological development in semiconductor devices, has made small and low-cost microprocessors, e.g. single chip processors, an attractive component in control and data acquisition systems. In the early days of computer-controlled control systems a central computer managed all the computations and input/output operations in the system. But the new processors have made it possible and feasible to distribute the computations and input/output operations to smaller local computers (slave units), which are configured and/or monitored from a central computer (master unit). This approach frees the control-related computational effort in the central computer, which can instead be used for e.g. a better user interface. However, in order to obtain a feasible solution efficient and reliable communication between the master unit and the slave unit is required.

The communications between the master unit and the slave unit typically comprise instructions (commands) associated with a set of parameters (data). Typically a computer program is downloaded from the master unit to the slave unit, which - after the download - will run the program. However, it may be required to download additional information from the master unit to the slave unit while the down-loaded program is executed in the slave unit. Further, in order to obtain a cost efficient solution, single chip processors with a small memory and a very limited number of additional components are preferred. Therefore, it is important that the effort associated with the communications in the slave unit occupies as little memory and processor time as possible. Another and important aspect of the communications is that they have to be reliable. If a command to the slave unit is lost, it can be fatal to the function of the control system in question.

US patent 5,530,436 discloses a method of communication between a master unit and a slave unit, wherein a control byte comprising an expansion bit is transmitted with a succeeding first address byte. If an additional second address byte is required, then an expansion bit is set and the additional second address byte succeeds the first address byte. This is convenient if it is most likely that only the first address byte is needed. Although this is an efficient coding of addresses, it does not take into account that commands and associated data also need an efficient coding, neither does this coding scheme incorporate a reliability handling procedure.

EP-A-0482953 discloses a communications network having a master unit and a plurality of slave units which are connected to a common communications bus. Each of the master and slave unit are capable of successively issuing a plurality of command data through asynchronous transmission to another unit and returning acknowledgement data in response to the command data transmitted from another unit. The units add received data to acknowledgement data when the acknowledgement data is to be returned. The command data includes first command data requiring acknowledgement data and second command data requiring no acknowledgement data. Each unit handles the first and second command data differently when the acknowledgement data is to be returned.

Summary of the Invention

An object of the invention is to provide a method which provides an efficient and flexible protocol. Especially when a large set of small messages has to be communicated.

This is achieved according to the invention by a method of communication between a master unit and a slave unit according to claim 1, comprising the steps of: sending a command byte and a number of data bytes from the master unit to the slave unit, said command byte comprising data byte counter bits; receiving the command byte and the number of data bytes; characterized in that the number of data bytes is determined according to the following rule set:

if said data byte counter bits belong to a first set of commands, then said data byte counter bits contain information representing a number of associated data bytes which is an expected number of data bytes; and

if said data byte counter bits belong to a second set of commands, then said data byte counter bits contains information representing a number which must be decoded before an expected number of data bytes is obtained.

Consequently, it is possible to transmit and receive messages in a slave unit and a master unit, such that efficient communication of a set of messages comprising a relatively large number of short messages is obtained, it being possible to have long messages. Or such that efficient communication of a set of messages comprising a relatively large number of long messages is obtained, it being possible to have short messages.

The command byte may further comprise a message counter, which is increased each time a new message is sent, but remains unchanged during retransmissions. Hereby, a more reliable communication scheme is obtained.

The invention also relates to a method of receiving information in a slave unit according to claim 10, to a method of sending information from a master unit according to claim 19, to a computer system for communication between a master unit and a slave unit according to claim 27, a computer system for receiving information according to claim 28, and to a computer system of sending information according to claim 29.

Moreover, the invention relates to a computer readable media according to claims 9, 18 and 26.

Embodiments are specified in the dependent claims.

Brief Description of the Drawings

fig. 1 shows a preferred embodiment of the present invention having a slave transceiver unit and a master transceiver unit;

fig. 2 shows a preferred bit allocation in a command byte according to the invention;

fig. 3 shows three examples of command bytes and the associated number of data bytes according to the invention;

fig. 4 shows a distribution of commands as a function of possible commands and number of data bytes;

fig. 5 shows a flow chart for transmitting commands according to the distribution shown in fig. 4;

fig. 6 shows a flow chart for receiving commands according to the distribution shown in fig. 4;

fig. 7 shows an example of how a lost or erroneous byte sequence will be handled with a message counter according to the invention and with a retransmission flag according to the prior art.

Detailed Description of Preferred Embodiments

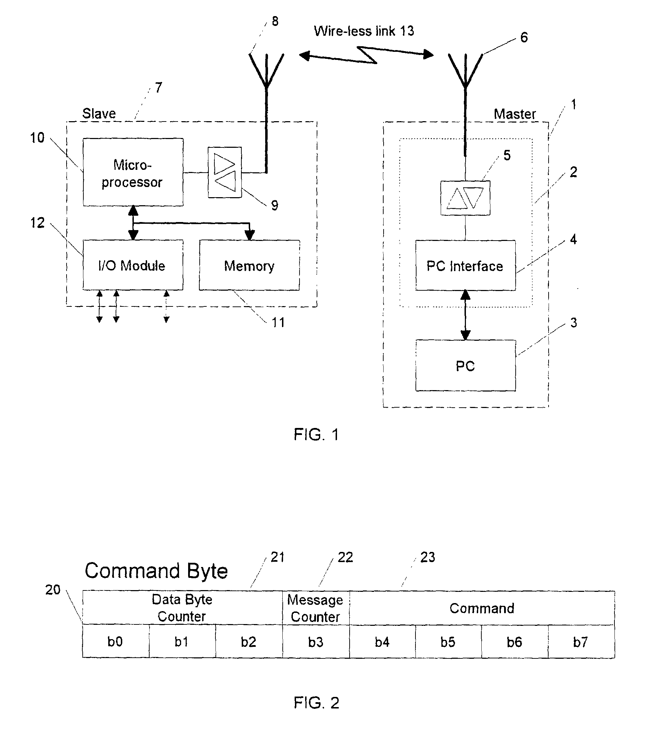

Fig. 1 shows a preferred embodiment of the present invention having a slave unit and a master unit. The master unit 1 comprises a transceiver (transmitter and receiver) 2 and a personal computer 3, PC. The terms personal computer and PC comprise any type of computers e.g. embedded computers and general purpose computers. The PC 3 is connected by wire to the transceiver 2, using a common PC interface, e.g. a serial RS232 port or an 8-bit parallel port. The transceiver 2 is responsible for communication with a slave unit 7 over the wire-less link 13. The transceiver 2 comprises a PC interface 4 which operates according to the selected PC interface. The transceiver 2 further comprises a two-way repeater and modulator/demodulator 5, which converts signals from the PC interface to signals adapted for a wire-less transmitter and receiver device 6, and visa versa. The wire-less communication may be implemented by means of e.g. RF transmission, ultrasound, or infrared light.

The slave unit 7 like the transceiver 2, has a two-way repeater and modulator/demodulator 9 and a transmitter and receiver device 8. The microprocessor 10 is thereby able to communicate with the master unit 1. The microprocessor is connected to a memory 11 and an input/output module 12, I/O module. The I/O module comprises drivers for e.g. electrical motors, light emitting diodes (LED's), and appropriate interfaces to sensors e.g. switches, photodiodes, etc. The I/O module is configured such that it is possible to control a system. The system may e.g. be a toy train which has a motor for driving the train and sensors/actuators for starting and stopping the train either manually or automatically.

The master unit 1 transmits information to be interpreted by the microprocessor 10. The information e.g. in the form of instructions and associated data may be bundled to constitute a computer program which can be executed by the microprocessor 10. In a preferred embodiment the slave unit 7 receives a software program comprising commands and data which can be executed, while the slave unit 7 receives more commands/data which are provided as additional input to the software program. In this way a control program may be downloaded from the master unit 1, and the software may be able to respond to sensor signals as well as to user commands from the PC 3.

In the same way the slave unit may be able to transmit information to the master unit either as simple acknowledge information or e.g. as sensor initiated commands/requests to the PC 3.

The system shown in fig. 1 is an example of a system with a relatively low bandwidth wire-less link and a slave unit, the smallest possible hardware being preferred. Thereby, in at least its first aspect, the present invention is primarily directed to communication between the master 1 and the slave 7 over the wire-less link 13.

Information is communicated over the wire-less link 13 in the following byte format:

$$CMD\ \overline{CMD}\ DATA_1\ \overline{DATA}_1\ \cdots\ DATA_N\ \overline{DATA}_N\ CHK\ \overline{CHK}$$

where CMD is a command byte, $DATA_1$ to $DATA_N$ is data bytes associated with the command byte and CHK is a check sum. The check sum is calculated as an 8-bit truncated addition of the command byte (CMD) and the succeeding data bytes ($DATA_1$ .. $DATA_N$). The bar indicates the byte complement, but these bytes are not included in the check sum. N is the number of data bytes that succeeds a specific command. This format is used whenever a command is transmitted. The purpose of sending the byte complement is to obtain a DC free signal to the transceiver. Further, most single chip microprocessors are byte-oriented, thereby making this byte format feasible.

A practical implementation of the present invention may comprise a combination of hardware and software. The physical interface between the master unit 1 and slave unit 7 may of course comprise some type of hardware which is capable og converting logic data signals into physical signals and vice versa. However, the invention may be implemented in hardware, software, or a combination thereof. The software may be embodied in a program which may be executed in any of the hardware devices capable of doing so, e.g. the micro-processor/memory 10/11, the PC interface 4 or the computer PC 3.

Fig. 2 shows a preferred bit allocation in a command byte according to the invention. The command byte 20 has 8 bits, b0 - b7. The data byte counter 21 comprises three bits, b0 - b2 and indicates the number N of data bytes succeeding the command byte. The command 23 comprises four bits, b4 - b7. The message counter 22 comprises one bit, b3.

This allocation traditionally allows 16 different commands coded by b4, b5, b6, and b7, each command having from 0 to 7 data bytes coded by b0, b1, and b2.

If the number of data bytes is combined with the number of commands, then 128 different combinations are obtained, with an implicit grouping of the commands, such that 8 groups of 16 commands have from 0 to 7 data bytes respectively. To be efficient, this 7-bit straight forward coding of the 128 combinations requires that a command set using this coding scheme fits this grouping of the commands and the associated number of data bytes.

If this implicit associated number of data bytes is skipped to avoid the grouping of commands, e.g. if more than 16 commands use 1 data byte, each 7-bit commmand must be associated with a respective fixed number of data bytes. However, this will increase the complexity of the decoding circuit/software. In particular when the decoding is executed in a byte-oriented microprocessor, it will be necessary to have a look-up table to indicate the number of data bytes associated with a specific 7-bit command. On the other hand, if the number of possible data bytes is fixed and equal for all of the commands a simple decoding circuit can be used, but this scheme will not be efficient, regarding communication bandwidth, if a small number of commands having a relatively large number of data bytes must be supported.

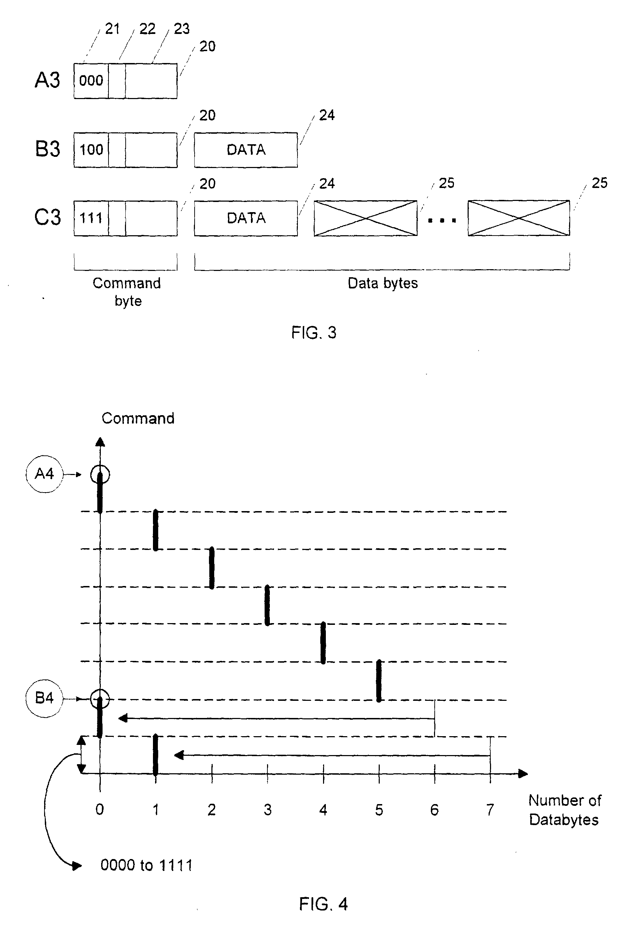

Fig. 3 shows three examples of command bytes and the associated number of data bytes according to the invention. The examples A3, B3, and C3 each comprise a command byte 20, the command byte further comprising a data byte counter 21, a message counter 22, and a command 23. The data bytes 24 are the expected data bytes, whereas the bytes 25 are bytes that are not sent or expected.

Example A3 shows a command byte where the data byte counter 21 with the binary value "000" indicates that no data bytes are expected.

Example B3 shows a command byte where the data byte counter 21 with the binary value "100" indicates that one data byte is expected.

Example C3 shows a command byte where the data byte counter 21 with the binary value "111" indicates that seven data bytes are expected. However, according to the invention it is possible to configure this group of commands such that only one data byte is expected. This option provides a more efficient coding scheme if a relatively large number of commands uses a small number of data bytes.

Fig. 4 shows a distribution of commands as a function of possible commands and number of data bytes. The 4-bit command space represented by b4-b7 is repeated 8 times along the command axis. A vertical bold bar represents a span of 16 commands. For a number of applications 6 and 7 data bytes are not needed, and therefore these two groups are respectively moved to the groups having 0 and 1 data bytes. For example the specific command (A4) is coded with the command b4=1, b5=1, b6=1, b7=1, having 0 data bytes: b0=0 (LSB), b1=0, b2=0 (MSB), where LSB is the least significant bit and MSB is the most significant bit. However, the specific command (B4) is coded with the command b4=1, b5=1, b6=1, b7=1, having 6 data bytes: b0=0 (LSB), b1=1, b2=1 (MSB). But the command (B) is interpreted as having no data bytes. With this scheme it is possible to configure a selectable set of commands having a number of data bytes different from that indicated by the data byte counter, e.g. 1,2, or 17 data bytes, while another set has the number of data bytes indicated by the data byte counter, e.g. 1, 2, 3, 4, or 5 databytes. LSB and MSB may be transmitted in reverse order, if convenient.

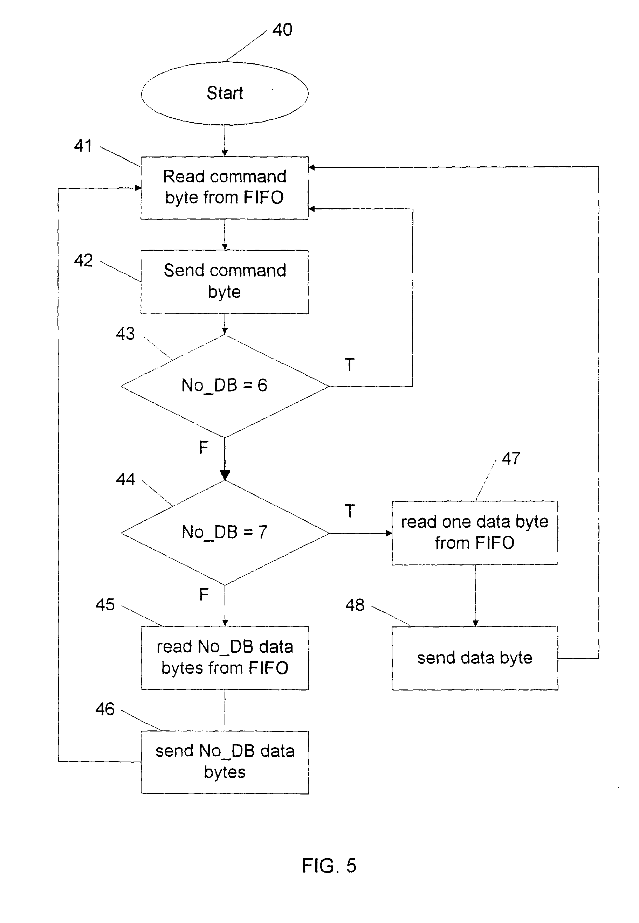

Fig. 5 shows a flow chart for transmitting commands according to the distribution shown in fig. 4. In a preferred embodiment the master unit shown in fig. 1 will enable a transmission procedure through the start state 40. The procedure may e.g. read the information to be transmitted from a first-in-first-out, FIFO, register in which a sequential list of command bytes and data bytes is stored. The state 41 reads a command byte from the FIFO register, and the state 42 sends the command byte. In the state 43 it is tested whether the number of data bytes, No_DB, indicated by the data byte counter 21 (fig. 2) is equal to the value "6". If this is true, then no data bytes are associated with that command, and the procedure stops. In the state 44 it is tested whether the number of data bytes, No_DB, indicated by the data byte counter 21 (fig. 2) is equal to the value "7". If this is true, then the state 47 reads one data byte from the FIFO register, and the state 48 sends the data byte. If No_DB is equal to one of the values "0", "1", "2", "3", "4", or "5", then No_DB data bytes are read from the FIFO in the state 45 and sent by the state 46.

The flow chart in fig. 5 may be implemented in hardware, software, or a combination thereof. The software implementing the flow chart in fig. 5 or a part thereof is called the master software. The master software may be embodied in a program which may be executed in any of the hardware devices mentioned above, i.e. the master unit and/or the slave unit.

The software may be distributed by means of any data storage or data transmission medium. The medium comprises floppy discs, CD-ROM, mini disc, compact disc or a network. The network may e.g. be the Internet. Via the network a software embodiment of the invention may be distributed by downloading a computer program. The software may comprise the master software alone.

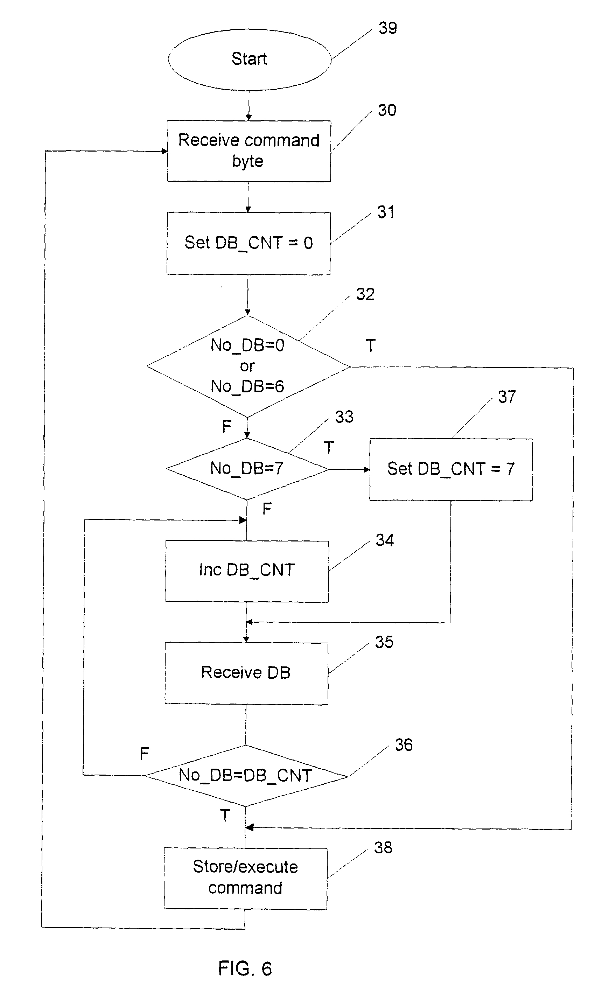

Fig. 6 shows a flow chart for receiving commands according to the distribution shown in fig. 4. In a preferred embodiment the slave unit shown in fig. 1 will be in a receiving mode, waiting to receive a command byte 20 (fig. 2), unless the receiver replies to a transmitter with an acknowledge signal. The acknowledge signal is preferably the received signal:

$$CMD\ \overline{CMD}\ DATA_1\ \overline{DATA}_1\ \cdots\ DATA_N\ \overline{DATA}_N\ CHK\ \overline{CHK}$$

or a signal complementary to that. The acknowledge signal can be transmitted or returned when the whole byte sequence is received.

The slave unit 7 is initiated in the state start 39. When e.g. the slave unit 7 (fig. 1) is in the receiving mode, the state 30 will wait for a command byte and read the contents, i.e. the data byte counter field, No_DB, and the command field, CMD, of that byte. When the command byte is received, the next state 31 will initialize the data byte counter to the value "0". The state 32 looks for command bytes with no succeeding data bytes, that is if the number of data bytes, No_DB, read from the command byte is equal to "0" or "6". If the result of the state 32 is true, the command byte will be stored/executed in the state 38.

If the result of the state 32 is false, it will be checked if the number data bytes, No_DB, is equal to "7", that is only one data byte is expected after the command byte. If No_DB is equal to "7", then one data byte is expected and the data byte counter will be set to "7" in the state 37. The expected data byte will be read in the state 35 and stored/executed in the state 38.

If the number of data bytes read in the command byte is equal to "1", "2", "3", "4", or "5", the result of state 33 is false and a loop comprising the states 34, 35, and 36 will be entered, and the loop will run until the number of data bytes is equal to the data byte counter. Every time the loop is run through the data byte counter, DB_CNT, is increased. When all data bytes belonging to a given command byte have been retrieved, the receiver will wait for a new command byte. With this approach it is possible to decode the distribution of commands shown in fig. 4.

Another aspect of the invention is the single bit message counter 22 shown in fig. 2 as bit b3, which is used to obtain a more robust information communication.

The flow chart in fig. 6 may be implemented in hardware, software, or a combination thereof. The software implementing the flow chart in fig. 6 or a part thereof is called the slave software. The slave software may be embodied in a program which may be executed in any of the hardware devices mentioned above, i.e. the master unit and/or the slave unit.

The software may be distributed by means of any data storage or data transmission medium. The medium comprises floppy discs, CD-ROM, mini disc, compact disc or a network. The network may e.g. be the Internet. Via the network a software embodiment of the invention may be distributed by downloading a computer program. The software may comprise the slave software alone.

Likewise, the master and slave software may be distributed in a single software package, as mentioned above.

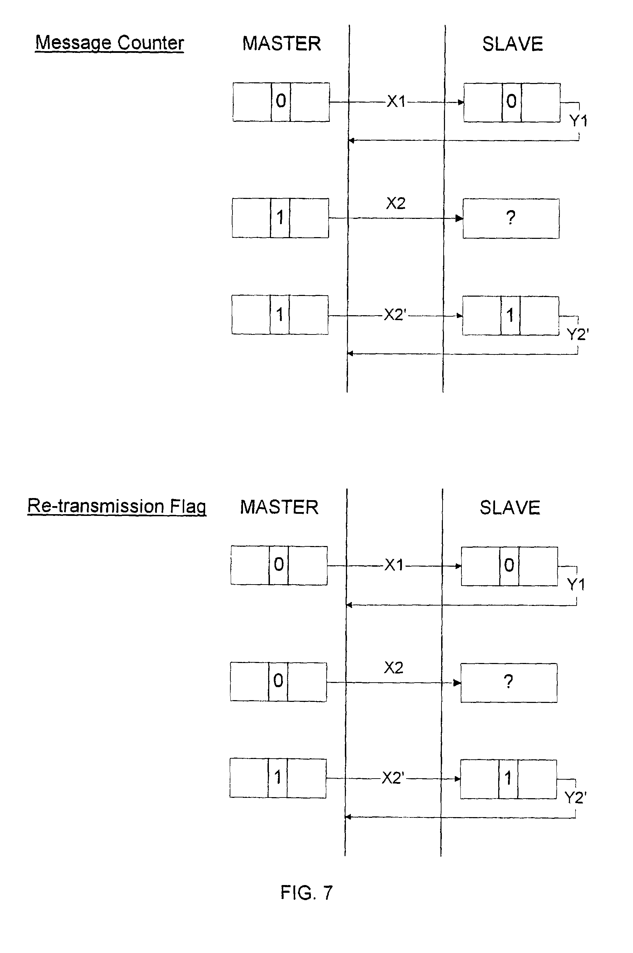

Fig. 7 shows an example of how a lost or erroneous byte sequence will be handled with a message counter according to the invention and with a retransmission flag according to the prior art. Without loss of generality, this example is provided by the transmission between a master unit and a slave unit, the communication comprising a command byte. In case of a message counter, and according to one aspect of the invention, the first command byte X1 transmitted from the master unit has its message counter set to "0". The command byte X1 is received correctly in the slave unit and returned as an acknowledge signal Y1. The master unit is ready to transmit a new command X2 with its message counter set to 1. If an acknowledge signal Y2 for this message is not received by the master unit, then the command X2 will be retransmitted. Note that the message counter is not changed because the communication is still processing message number 2 equal to a logic "1". The slave knows beforehand that it has to receive an altering bit, b3, for every new command to receive.

When using a retransmission flag, the communication may go wrong. The master unit transmits a command X1 with its retransmission flag set to "0". The slave unit receives X1 and transmits an acknowledge signal Y1, which is received in the master unit. The master is thereby ready to transmit a new command X2 with its retransmission flag set to "0". The command X2 is not acknowledged by the slave unit and the master unit will transmit a retransmission X2' of X2 with its retransmission flag set to "1". This retransmission is received and acknowledged correctly by the slave unit. If the command X1 is identical to X2', then the slave unit may - incorrectly - interpret the command X2' as a retransmission of X1 and thereby discard the command without storing or executing it.

Preferably a master unit may communicate with one of a number of slave units over a wire-less link, just as slave units may communicate with each other. Slave units may respond to interchangeable information or operate as dummy repeaters. This aspect of the present invention may be readily implemented by a person skilled in the art. However, a preferred way of providing these features is to expand the byte format with an address field, ADR:

$CMD \ \overline{CMD} \ ADR \ \overline{ADR} \ DATA_1 \ \overline{DATA}_1 \ \cdots \ DATA_N \ \overline{DATA}_N \ CHK \ \overline{CHK}$

where CMD is the command byte, $DATA_1$ to $DATA_N$ is the data bytes associated with the command byte and CHK is the check sum. N is the number of data bytes. Each slave unit is thereby associated with a unique address.

**Claims**

1. A method of communication between a master unit and a slave unit comprising the steps of:

    - sending a command byte (20) and a number of data bytes (24,25) from the master unit (1) to the slave unit (7), said command byte (20) comprising data byte counter bits;
    - receiving the command byte (20) and the number of data bytes (24,25);

    **characterized in that** the number of data bytes (24,25) is determined according to the following rule set:

        if said data byte counter bits (b0,b1,b2) belong to a first set of commands, then said data byte counter bits contain information representing a number of associated data bytes (24,25) which is an expected number of data bytes; and
        if said data byte counter bits (b0,b1,b2) belong to a second set of commands, then said data byte counter bits contains information representing a number which must be decoded before an expected number of data bytes (24,25) is obtained.

2. The method according to claim 1, further comprising the step of:

        increasing a message counter (b3) in said command byte (20) each time a new message is sent, except when the message is retransmitted.

3. The method according to claim 2, wherein said step of increasing a message counter (b3) includes a step of increasing a single bit.

4. The method according to claim 1, wherein said step of sending a command byte includes the step of sending the command byte (20), of which three bits (b0,b1,b2) are data byte counter bits.

5. The method according to claim 1, wherein said step of sending a command byte (20) having data byte counter bits (b0,b1,b2) belonging to the first set of commands comprises a step of sending one of six groups of commands, each group being respectively associated with none, one, two, three, four, and five data bytes; and wherein said step of sending a command byte (20) having data byte counter bits (b0,b1,b2) belonging to the second set of commands comprises a step of sending 2 groups of commands, each group being respectively associated with none and one data bytes.

6. The method according to claim 1, further comprising the steps of:

        sending an address byte for addressing a slave unit; and
        sending a complementary byte for each of the command, data, and address bytes.

7. The method according to claim 1, further comprising the steps of:

        sending a check sum succeeding said data bytes; and
        sending a complementary byte for each of the command, data, and check sum bytes.

8. The method according to claim 1, further comprising the step of:

        returning an acknowledge signal which is identical to the received signal.

9. A computer readable medium, naving a program recorded thereon, where the program when executed on a computer system is adapted to make the computer system execute the method according to any of claims 1 through 8.

10. A method of receiving information in a slave unit (7), comprising the steps of:

    - receiving a command byte (20) comprising data byte counter bits (b0,b1,b2); and
    - receiving a number of data bytes (24,25);

    **characterized in that** the number of data bytes is determined according to the following rule set:

        if said data byte counter bits (b0,b1,b2) belong to a first set of commands, then said data byte counter bits contain information representing a number of associated data bytes (24,25) which is an expected number of data bytes; and
        if said data byte counter bits (b0,b1,b2) belong to a second set of commands, then said data byte counter bits contain information representing a number which must be decoded before an expected number of data bytes (24,25) is obtained.

11. The method according to claim 10, wherein said step of receiving a command byte (20) comprises a step of receiving a message counter (b3) which remains unchanged during retransmissions.

12. The method according to claim 11, wherein said step of receiving a message counter (b3) includes a step of receiving a single bit.

13. The method according to claim 10, wherein the step of receiving a command byte includes a step of receiving the command byte (20) of which three bits (b0,b1,b2) are data byte counter bits.

14. The method according to claim 10, wherein said step of receiving a command byte (20) having data byte counter bits (b0,b1,b2) belonging to the first set of commands comprises a step of receiving one of six groups of commands, each group being respectively associated with none, one, two, three, four, and five data bytes; and wherein said step of receiving a command byte (20) having data byte counter bits (b0,b1,b2) belonging to the second set of commands comprises a step of sending two groups of commands, each group being respectively associated with none and one data bytes.

15. The method according to claim 10, further comprising the steps of:

receiving an address byte and interpreting the associated command and data bytes (20; 24,25) if said address byte is accepted; and receiving a complementary byte for each of the command, data, and address bytes.

16. The method according to claim 10, further comprising the steps of:

receiving a check sum succeeding said data bytes; and receiving a complementary byte for each of the command, data, and check sum bytes.

17. The method according to claim 10, further comprising the step of:

returning an acknowledge signal which is identical to the received signal.

18. A computer readable medium, having a program recorded thereon, where the program when executed on a computer is adapted to make the computer execute the method according to any of claims 10 through 17.

19. A method of sending information from a master unit, comprising the steps of:

- sending a command byte (20) comprising data byte counter bits (b0,b1,b2); and
- sending a number of data bytes (24, 25) ;

**characterized in that** the number of data bytes is determined according to the following rule set:

if said data byte counter bits (b0,b1,b2) belong to a first set of commands, then said data byte counter bits contain information representing a number of associated data bytes (24,25) which is the number of data bytes to be sent; and if said data byte counter bits belong to a second set of commands, then said data byte counter bits (b0,b1,b2) contain information representing a number which must be encoded before the number of data bytes (24,25) to be sent is obtained.

20. The method according to claim 19, wherein said step of sending a command byte further comprises a step of sending a message counter (b3) which is increased each time a new message is sent, except when the message is retransmitted.

21. The method according to claim 20, wherein said step of increasing a message counter (b3) includes a step of increasing a single bit.

22. The method according to claim 19, wherein said step of sending a command byte includes sending the command byte (20), of which three bits (b0,b1,b2) are data byte counter bits.

23. The method according to claim 19, wherein said step of sending a command byte (20) having data byte counter bits (b0,b1,b2) belonging to the first set of commands comprises a step of sending one of six groups of commands, each group being respectively associated with none, one, two, three, four, and five data bytes; and wherein said step of sending a command byte (20) having data byte counter bits (b0,b1,b2) belonging to the second set of commands comprises a step of sending two groups of commands, each group being respectively associated with none and one data bytes.

24. The method according to claim 19, further comprising the steps of:

sending an address byte for addressing a slave unit; and sending a complementary byte for each of the command, data, and address bytes.

**25.** The method according to claim 19, further comprising the steps of:

> sending a check sum succeeding said data bytes; and
> sending a complementary byte for each of the command, data, and check sum bytes.

**26.** A computer readable medium, having a program recorded thereon, where the program when executed on a computer is adapted to make the computer execute the method according to any of claims 19 through 25.

**27.** A computer system for communication between a master unit (1) and a slave unit (7) comprising:

> - means for sending a command byte (20) and a number of data bytes (24,25) from the master unit to the slave unit comprising data byte counter bits (b0,b1,b2);
> - means for receiving the command byte and the number of data bytes;

> **characterized by** means for determining the number of data bytes according to the following rule set:

>> if said data byte counter bits (b0,b1,b2) belong to a first set, then said data byte counter bits contain information representing a number of associated data bytes (24,25) which is an expected number of data bytes; and
>> if said data byte counter bits (b0,b1,b2) belong to a second set, then said data byte counter bits contain information representing a number which must be decoded before an expected number of data bytes (24,25) is obtained.

**28.** A computer system for receiving information in a slave unit (7), comprising:

> - means for receiving a command byte (20) comprising data byte counter bits (b0,b1,b2); and
> - means for receiving a number of data bytes;

> **characterized by** means for determining the number of data bytes according to the following rule set:

>> if said data byte counter bits (b0,b1,b2) belong to a first set, then said data byte counter bits contain information representing a number of associated data bytes (24,25) which is an expected number of data bytes; and
>> if said data byte counter bits (b0,b1,b2) belong to a second set, then said data byte counter bits contain information representing a number which must be decoded before an expected number of data bytes (24,25) is obtained.

**29.** A computer system for sending information from a master unit (1), comprising:

> - means for sending a command byte (20) comprising data byte counter bits (b0,b1,b2); and
> - means for sending a number of data bytes (24,25);

> **characterized by** means for determining the number of data bytes according to the following rule set:

>> if said data byte counter bits (b0,b1,b2) belong to a first set, then said data byte counter bits contain information representing a number of associated data bytes (24,25) which is the number of data bytes to be sent; and
>> if said data byte counter bits (b0,b1,b2) belong to a second set, then said data byte counter bits contain information representing a number which must be encoded before the number of data bytes (24,25) to be sent is obtained.

**Patentansprüche**

**1.** Verfahren zur Kommunikation zwischen einer Haupteinheit und einer Untereinheit, das die folgenden Schritte umfasst:

> - Senden eines Befehlsbytes (20) und einer Anzahl von Datenbytes (24, 25) von der Haupteinheit (1) zu der Untereinheit (7), wobei das Befehlsbyte (20) Datenbytezählbits aufweist;

> - Erhalten des Befehlsbytes (20) und der Anzahl von Datenbytes (24, 25);

> **dadurch gekennzeichnet, dass** die Anzahl von Datenbytes (24, 25) gemäß dem folgenden Regelsatz bestimmt wird:

>> wenn die Datenbytezählbits (b0, b1, b2) zu einem ersten Befehlssatz gehören, dann enthalten diese Datenbytezählbits eine Anzahl verknüpfter Datenbytes (24, 25) repräsentierende Informationen; und

>> wenn die genannten Datenbytezählbits (b0, b1, b2) zu einem zweiten Befehlssatz gehören, dann enthalten diese Datenbytezählbits eine Anzahl darstellende Informationen, die decodiert werden muss, bevor eine erwartete Anzahl von Datenbytes (24, 25) erhalten wird.

2. Verfahren nach Anspruch 1, das weiter den folgenden Schritt umfasst:

Erhöhen eines Mitteilungszählers (b3) in dem genannten Befehlsbyte (20) bei jeder Sendung einer neuen Mitteilung, außer wenn die Mitteilung erneut.übertragen wird.

3. Verfahren nach Anspruch 2, bei dem der Schritt zum Erhöhen eines Mitteilungszählers (b3) einen Schritt zum Erhöhen eines einzelnen Bits umfasst.

4. Verfahren nach. Anspruch 1, bei dem der Schritt zum Senden eines Befehlsbytes den Schritt umfasst, das Befehlsbyte (20) zu senden, von dem drei Bits (b0, b1, b2) Datenbytezählbits sind.

5. Verfahren nach Anspruch 1, bei dem der Schritt zum Senden eines Befehlsbytes (20) mit zu dem ersten Befehlssatz gehörenden Datenbytezählbits (b0, b1, b2) einen Schritt aufweist, eine von sechs Gruppen von Befehlen zu senden, wobei jede Gruppe jeweils mit keinem, einem, zwei, drei, vier und fünf Datenbytes verknüpft ist; und wobei der Schritt zum Senden eines Befehlsbytes (20) mit zu dem zweiten Befehlssatz gehörenden Datenbytezählbits (b0, b1, b2) einen Schritt aufweist, 2 Gruppen von Befehlen zu senden, wobei jede Gruppe jeweils mit keinem und einem Datenbyte verknüpft ist.

6. Verfahren nach Anspruch 1, das weiter die folgenden Schritte aufweist:

Senden eines Adressbytes zum Adressieren einer Untereinheit; und
Senden eines komplementären Bytes für jede der Befehls-, Daten- und Adressbytes.

7. Verfahren nach Anspruch 1, das weiter die folgenden Schritte umfasst:

Senden einer den Datenbytes nachfolgenden Prüfsumme; und Senden eines komplementären Bytes für jede der Befehls-, Daten-, und Prüfsummenbytes.

8. Verfahren nach Anspruch 1, das weiter den Schritt umfasst:

Zurücksenden eines Rückmeldesignals, das identisch mit dem erhaltenen Signal ist.

9. Computerlesbares Medium mit einem darauf aufgezeichneten Programm, wobei das Programm bei Ausführung auf einem Computersystem ausgelegt ist, das Computersystem das Verfahren gemäß einem der Ansprüche 1 bis 8 ausführen zu lassen.

10. Verfahren zum Erhalten von Informationen in einer Untereinheit (7), das die folgenden Schritte umfasst:

- Erhalten eines Befehlsbytes (20), das Datenbytezählbits (b0, b1, b2) aufweist; und

- Erhalten einer Anzahl von Datenbytes (24, 25);

**dadurch gekennzeichnet, dass** die Anzahl von Datenbytes gemäß dem folgenden Regelsatz bestimmt wird:

wenn die Datenbytezählbits (b0, b1, b2) zu einem ersten Befehlssatz gehören, dann enthalten die Datenbytezählbits die Anzahl verknüpfter Datenbytes (24, 25) darstellende Informationen, welche eine erwartete Anzahl von Datenbytes ist; und

wenn die Datenbytezählbits (b0, b1, b2) zu einem zweiten Befehlssatz gehören, dann enthalten diese Datenbytezählbits eine Anzahl repräsentierende Informationen, die decodiert werden muss, bevor eine erwartete Anzahl von Datenbytes (24, 25) erhalten wird.

11. Verfahren nach Anspruch 10, bei dem der Schritt zum Erhalten eines Befehlsbytes (20) einen Schritt umfasst, einen Mitteilungszähler (b3) zu erhalten, der während Wiederübertragungen unverändert bleibt.

12. Verfahren nach Anspruch 11, bei dem der Schritt zum Erhalten eines Mitteilungszählers (b3) einen Schritt umfasst, ein einzelnes Bit zu erhalten.

13. Verfahren nach Anspruch 10, bei dem der Schritt zum Erhalten eines Befehlsbytes einen Schritt umfasst, das Befehlsbyte (20) zu erhalten, von dem drei Bits (b0, b1, b2) Datenbytezählbits sind.

14. Verfahren nach Anspruch 10, bei dem der Schritt zum Erhalten eines Befehlsbytes (20) mit zu dem ersten Befehlssatz gehörenden Datenbytezählbits (b0, b1, b2) einen Schritt aufweist, eine von sechs Befehlsgruppen zu erhalten, wobei jede Gruppe jeweils mit keinem, einem, zwei, drei, vier und fünf Datenbytes verknüpft ist; und bei dem der Schritt zum Erhalten eines Befehlsbytes (20) mit zu dem zweiten Befehlssatz gehörenden Datenbytezählbits (b0, b1, b2) einen Schritt aufweist, zwei Befehlsgruppen zu senden, wobei jede Gruppe jeweils mit keinem und einem Datenbyte verknüpft ist.

15. Verfahren nach Anspruch 10, das weiter die folgenden Schritte umfasst:

> Erhalten eines Adressbytes und Interpretieren der zugehörigen Befehls- und Datenbytes (20; 24, 25), wenn das Adressbyte akzeptiert wird; und

> Erhalten eines komplementären Bytes für jede der Befehls-, Daten- und Adressbytes.

16. Verfahren nach Anspruch 10, das weiter die folgenden Schritte umfasst:

> Erhalten einer den Datenbytes nachfolgenden Prüfsumme; und

> Erhalten eines komplementären Bytes für jede der Befehls-, Daten- und Prüfsummenbytes.

17. Verfahren nach Anspruch 10, das weiter den Schritt umfasst:

> Zurücksenden eines Rückmeldesignals, das identisch mit dem erhaltenen Signal ist.

18. Computerlesbares Medium mit einem darauf aufgezeichneten Programm, wobei das Programm bei Ausführung auf einem Computer ausgelegt ist, um den Computer das Verfahren gemäß einem der Ansprüche 10 bis 17 ausführen zu lassen.

19. Verfahren zum Senden von Informationen von einer Haupteinheit, das die folgenden Schritte umfasst:

> - Senden eines Befehlsbytes (20), das Datenbytezählbits (b0, b1, b2) umfasst; und

> - Senden einer Anzahl von Datenbytes (24, 25);

> **dadurch gekennzeichnet, dass** die Anzahl von Datenbytes gemäß dem folgenden Regelsatz bestimmt wird:

> wenn die Datenbytezählbits (b0, b1, b2) zu einem ersten Befehlssatz gehören, dann enthalten die Datenbytezählbits eine Anzahl verknüpfter Datenbytes (24, 25) repräsentierende Informationen, welche die Anzahl von zu sendenden Datenbytes ist; und

> wenn die Datenbytezählbits zu einem zweiten Befehlssatz gehören, dann enthalten die Datenbytezählbits (b0, b1, b2) eine Anzahl darstellende Informationen, die codiert werden muss, bevor die Anzahl von zu sendenden Datenbytes (24, 25) erhalten wird.

20. Verfahren nach Anspruch 19, bei dem der Schritt zum Senden eines Befehlsbytes weiter einen Schritt umfasst, einen Mitteilungszähler (b3) zu senden, der jeweils bei Senden einer neuen Mitteilung erhöht wird, außer wenn die Mitteilung erneut übertragen wird.

21. Verfahren nach Anspruch 20, bei dem der Schritt zum Erhöhen des Mitteilungszählers (b3) einen Schritt zum Erhöhen eines einzelnen Bits umfasst.

22. Verfahren nach Anspruch 19, bei dem der Schritt zum Senden eines Befehlsbytes umfasst, das Befehlsbyte (20) zu senden, von dem drei Bits (b0, b1, b2) Datenbytezählbits sind.

23. Verfahren nach Anspruch 19, bei dem der Schritt zum Senden eines Befehlsbytes (20) mit zu dem ersten Befehlssatz gehörenden Datenbytezählbits (b0, b1, b2) einen Schritt aufweist, eine von sechs Befehlsgruppen zu senden, wobei jede Gruppe jeweils mit keinem, einem, zwei, drei, vier und fünf Datenbytes verknüpft ist; und wobei der genannte Schritt zum Senden eines Befehlsbytes (20) mit zu dem zweiten Befehlssatz gehörenden Datenbytezählbits (b0, b1, b2) einen Schritt aufweist, zwei Befehlsgruppen zu senden, wobei jede Gruppe jeweils mit keinem und einem Datenbyte verknüpft ist.

24. Verfahren nach Anspruch 19, das weiter die folgenden Schritte aufweist:

> Senden eines Adressbytes zum Adressieren einer Untereinheit; und

> Senden eines komplementären Bytes für jede der Befehls-, Daten- und Adressbytes.

25. Verfahren nach Anspruch 19, das weiter die folgenden Schritte aufweist:

> Senden einer den Datenbytes nachfolgenden Prüfsumme; und

> Senden eines komplementären Bytes für jede der Befehls-, Daten- und Prüfsummenbytes.

26. Computerlesbares Medium mit einem darauf aufgezeichneten Programm, wobei das Programm bei Ausführung auf einem Computer ausgelegt ist, um den Computer das Verfahren gemäß einem der Ansprüche 19 bis 25 ausführen zu lassen.

27. Computersystem für Kommunikation zwischen einer Haupteinheit (1) und einer Untereinheit (7), umfassend:

> - Mittel zum Senden eines Befehlsbytes (20) und einer Anzahl von Datenbytes (24, 25) von einer Haupteinheit zu einer Untereinheit, die Datenbytezählbits (b0, b1, b2) aufweisen;

- Mittel zum Erhalten des Befehlsbytes und der Anzahl von Datenbytes;

**gekennzeichnet durch** Mittel zum Bestimmen der Anzahl von Datenbytes gemäß dem folgenden Regelsatz:

wenn die Datenbytezählbits (b0, b1, b2) zu einem ersten Satz gehören, dann enthalten die Datenbytezählbits eine Anzahl verknüpfter Datenbytes (24, 25) repräsentierender Informationen, welche eine erwartete Anzahl von Datenbytes ist; und

wenn die Datenbytezählbits (b0, b1, b2) zu einem zweiten Satz gehören, dann enthalten die Datenbytezählbits eine Anzahl repräsentierende Informationen, die decodiert werden muss, bevor eine erwartete Anzahl von Datenbytes (24, 25) erhalten wird.

28. Computersystem zum Erhalten von Informationen in einer Untereinheit (7), umfassend:

- Mittel zum Erhalten eines Befehlsbytes (20) mit Datenbytezählbits (b0, b1, b2); und

- Mittel zum Erhalten eines Anzahl von Datenbytes;

**gekennzeichnet durch** Mittel zum Bestimmen der Anzahl von Datenbytes gemäß dem folgenden Regelsatz:

wenn die Datenbytezählbits (b0, b1, b2) zu einem ersten Satz gehören, dann enthalten die Datenbytezählbits eine Anzahl verknüpfter Datenbytes (24, 25) repräsentierende Informationen, welche eine erwartete Anzahl von Datenbytes ist; und
wenn die Datenbytezählbits (b0, b1, b2) zu einem zweiten Satz gehören, dann enthalten die Datenbytezählbits eine Anzahl repräsentierende Informationen, die decodiert werden muss, bevor eine erwartete Anzahl von Datenbytes (24, 25) erhalten wird.

29. Computersystem zum Senden von Informationen von einer Haupteinheit (1), umfassend:

- Mittel zum Senden eines Befehlsbytes (20), das Datenbytezählbits (b0, b1, b2) aufweist;

- Mittel zum Senden einer Anzahl von Datenbytes (24, 25);

**gekennzeichnet durch** Mittel zum Bestimmen der Anzahl von Datenbytes gemäß dem folgenden Regelsatz:

wenn die Datenbytezählbits (b0, b1, b2) zu einem ersten Satz gehören, dann enthalten die Datenbytezählbits eine Anzahl verknüpfter Datenbytes (24, 25) repräsentierende Informationen, welche die Anzahl von zu sendenden Datenbytes ist; und

wenn die Datenbytezählbits (b0, b1, b2) zu einem zweiten Satz gehören, dann enthalten die Datenbytezählbits eine Anzahl darstellende Informationen, die codiert werden muss, bevor die Anzahl von zu sendenden Datenbytes (24, 25) erhalten wird.

## Revendications

1. Procédé de communication entre une unité principale et une unité secondaire, comprenant les étapes :

- d'envoi d'un multiplet d'ordre (20) et d'un nombre de multiplets de données (24, 25) à partir de l'unité principale (1) à l'unité secondaire (7), ledit multiplet d'ordre (20) comprenant des bits de compteur de multiplets de données ;
- de réception du multiplet d'ordre (20) et du nombre de multiplets de données (24, 25) ;

**caractérisé en ce que** le nombre de multiplets de données (24, 25) est déterminé en fonction de l'ensemble de règle suivant :

si lesdits bits (b0, b1, b2) de compteur de multiplet de données appartiennent à une première série d'ordres, alors lesdits bits de compteur de multiplet de données contiennent une information représentant un nombre de multiplets associés (24, 25) de données qui est un nombre envisagé de multiplets de données ; et
si lesdits bits (b0, b1, b2) de compteur de multiplet de données appartiennent à une deuxième série d'ordres, alors ledits bits de compteur de multiplet de données contiennent une information représentant un nombre qui doit être décodé avant qu'un nombre envisagé de multiplets (24, 25) de données, soit obtenu.

2. Procédé selon la revendication 1, comprenant en outre l'étape :

d'augmentation d'un compteur (b3) de message dans ledit multiplet (20) d'ordre chaque fois qu'un nouveau message est envoyé, sauf quand le message est retransmis.

3. Procédé selon la revendication 2, dans lequel ladite étape d'augmentation du compteur (b3) de message comporte une étape d'augmentation d'un seul bit.

4. Procédé selon la revendication 1, dans lequel ladite étape d'envoi d'un multiplet d'ordre comporte l'étape d'envoi du multiplet (20) d'ordre, dont trois bits (b0, b1, b2) sont de bits de compteur de multiplet de données.

5. Procédé selon la revendication 1, dans lequel ladite étape d'envoi d'un multiplet (20) d'ordre ayant des bits (b0, b1, b2) de compteur de multiplet de données appartenant à la première série d'ordres comprend une étape d'envoi de l'un de six groupes d'ordres, chaque groupe étant associé respectivement avec aucun, un, deux, trois, quatre, et cinq multiplets de données ; et dans lequel ladite étape d'envoi d'un multiplet (20) d'ordre ayant des bits (b0, b1, b2) de compteur de multiplet de données appartenant à la deuxième série d'ordres comprend une étape d'envoi de 2 groupes d'ordres, chaque groupe étant associé respectivement avec aucun et un multiplet de données.

6. Procédé selon la revendication 1, comprenant en outre les étapes :

   d'envoi d'un multiplet d'adresse pour adresser une unité secondaire ; et
   d'envoi d'un multiplet complémentaire pour chacun des multiplets d'ordre, de données et d'adresse.

7. Procédé selon la revendication 1, comprenant en outre les étapes :

   d'envoi d'une somme de contrôle succédant auxdits multiplets de données ; et
   d'envoi d'un multiplet complémentaire pour chacun des multiplets d'ordre, de données et de somme de contrôle.

8. Procédé selon la revendication 1, comprenant en outre l'étape :

   de renvoi d'un signal d'accusé de réception qui est identique au signal reçu.

9. Support lisible en ordinateur, ayant un programme enregistré sur celui-ci, où le programme quand il est exécuté sur un système d'ordinateur est destiné à faire exécuter par le système d'ordinateur le procédé selon l'une quelconque des revendications 1 à 8.

10. Procédé de réception d'une information dans une unité secondaire (7), comprenant les étapes :

   - de réception d'un multiplet (20) d'ordre comprenant des bits (b0, b1, b2) de compteur de multiplet de données ; et
   - de réception d'un nombre de multiplets de données (24, 25) ;

   **caractérisé en ce que** le nombre de multiplets de données (24, 25) est déterminé en fonction de l'ensemble de règles suivant :

   si lesdits bits (b0, b1, b2) de compteur de multiplet de données appartiennent à une première série d'ordres, alors lesdits bits de compteur de multiplet de données contiennent une information représentant un nombre de multiplets associés (24, 25) de données qui est un nombre envisagé de multiplets de données ; et
   si lesdits bits (b0, b1, b2) de compteur de multiplet de données appartiennent à une deuxième série d'ordres, alors ledits bits de compteur de multiplet de données contiennent une information représentant un nombre qui doit être décodé avant qu'un nombre envisagé de multiplets (24, 25) de données, soit obtenu.

11. Procédé selon la revendication 10, dans lequel ladite étape de réception d'un multiplet (20) d'ordre comprend une étape de réception d'un compteur (b3) de message qui reste inchangé au cours de retransmissions.

12. Procédé selon la revendication 11, dans lequel ladite étape de réception d'un compteur (b3) de message comporte une étape de réception d'un seul bit.

13. Procédé selon la revendication 10, dans lequel l'étape de réception d'un multiplet d'ordre comporte une étape de réception du multiplet (20) d'ordre dont trois bits (b0, b1, b2) sont des bits de compteur de multiplet de données.

14. Procédé selon la revendication 10, dans lequel ladite étape de réception d'un multiplet (20) d'ordre ayant des bits (b0, b1, b2) de compteur de multiplet de données appartenant à la première série d'ordres comprend une étape de réception de l'un de six groupes d'ordres, chaque groupe étant associé respectivement avec aucun, un, deux, trois, quatre, et cinq multiplets de données ; et dans lequel ladite étape de réception d'un multiplet (20) d'ordre ayant des bits (b0, b1, b2) de compteur de multiplet de données appartenant à la deuxième série d'ordres comprend une étape d'envoi de deux groupes d'ordres, chaque groupe étant associé respectivement avec aucun et un multiplet de données.

**15.** Procédé selon la revendication 10, comprenant en outre les étapes :

> de réception d'un multiplet d'adresse et d'interprétation des multiplets associés (20; 24, 25) d'ordre et de données si ledit multiplet d'adresse est accepté ; et
> de réception d'un multiplet complémentaire pour chacun des mültiplets d'ordre, de données et d'adresse.

**16.** Procédé selon la revendication 10, comprenant en outre les étapes :

> de réception d'une somme de contrôle succédant auxdits multiplets de données ; et
> de réception d'un multiplet complémentaire pour chacun des multiplets d'ordre, de données et de somme de contrôle.

**17.** Procédé selon la revendication 10, comprenant en outre l'étape:

> de renvoi d'un signal d'accusé de réception qui est identique au signal reçu.

**18.** Support lisible en ordinateur, ayant un programme enregistré sur celui-ci, où le programme quand il est exécuté sur un ordinateur est apte à faire exécuter par l'ordinateur le procédé selon l'une quelconque des revendications 10 à 17.

**19.** Procédé d'envoi d'information à partir d'une unité principale, comprenant les étapes :

> - d'envoi d'un multiplet (20) d'ordre comprenant des bits (b0, b1, b2) de compteur de multiplet de données ; et
> - d'envoi d'un nombre de multiplets (24, 25) de données ;
>
> **caractérisé en ce que** le nombre de multiplets de données est déterminé en fonction de l'ensemble de règles suivant :
>
> si lesdits bits (b0, b1, b2) de compteur de multiplet de données appartiennent à une première série d'ordres, alors lesdits bits de compteur de multiplet de données contiennent une information représentant un nombre de multiplets associés (24, 25) de données qui est le nombre de multiplets de données à envoyer ; et
> si lesdits bits de compteur de multiplet de données appartiennent à une deuxième série d'ordres, alors ledits bits (b0, b1, b2) de compteur de multiplet de données contiennent une information représentant un nombre qui doit être codé avant que le nombre de multiplets (24, 25) de données à envoyer, soit obtenu.

**20.** Procédé selon la revendication 19, dans lequel ladite étape d'envoi d'un multiplet d'ordre comprend en outre une étape d'envoi d'un compteur (b3) de message qui est augmenté chaque fois qu'un nouveau message est envoyé, sauf quand le message est retransmis.

**21.** Procédé selon la revendication 20, dans lequel ladite étape d'augmentation d'un compteur (b3) de message comporte une étape d'augmentation d'un seul bit.

**22.** Procédé selon la revendication 19, dans lequel ladite étape d'envoi d'un multiplet d'ordre comporte l'envoi du multiplet (20) d'ordre, dont trois bits (b0, b1, b2) sont des bits de compteur de multiplet de données.

**23.** Procédé selon la revendication 19, dans lequel ladite étape d'envoi d'un multiplet (20) d'ordre ayant des bits (b0, b1, b2) de compteur de multiplet de données appartenant à la première série d'ordres comprend une étape d'envoi de l'un de six groupes d'ordres, chaque groupe étant associé respectivement avec aucun, un, deux, trois, quatre, et cinq multiplets de données ; et dans lequel ladite étape d'envoi d'un multiplet (20) d'ordre ayant des bits (b0, b1, b2) de compteur de multiplet de données appartenant à la deuxième série d'ordres comprend une étape d'envoi de deux groupes d'ordres, chaque groupe étant associé respectivement avec aucun et un multiplet de données.

**24.** Procédé selon la revendication 19, comprenant en outre les étapes :

> d'envoi d'un multiplet d'adresse pour adresser une unité secondaire ; et
> d'envoi d'un multiplet complémentaire pour chacun des multiplets d'ordre, de données et d'adresse.

**25.** Procédé selon la revendication 19, comprenant en outre les étapes :

> d'envoi d'une somme de contrôle succédant auxdits multiplets de données ; et
> d'envoi d'un multiplet complémentaire pour chacun des multiplets d'ordre, de données et de somme de contrôle.

**26.** Support lisible en ordinateur, ayant un programme enregistré sur celui-ci, où le programme quand il est exécuté sur un ordinateur est apte à faire exécuter par l'ordinateur le procédé selon l'une quelconque des revendications 19 à 25.

**27.** Système d'ordinateur pour une communication entre une unité principale (1) et une unité secondaire (7), comprenant :

- un moyen pour envoyer un multiplet (20) d'ordre et un nombre de multiplets de données (24, 25) à partir de l'unité principale à l'unité secondaire, comprenant des bits (b0, b1, b2) de compteur de multiplet de données ;
- un moyen pour recevoir le multiplet d'ordre et le nombre de multiplets de données ;

**caractérisé par** un moyen pour déterminer le nombre de multiplets de données en fonction de l'ensemble de règles suivant :

si lesdits bits (b0, b1, b2) de compteur de multiplet de données appartiennent à une première série, alors lesdits bits de compteur de multiplet de données contiennent une information représentant un nombre de multiplets associés (24, 25) de données qui est un nombre envisagé de multiplets de données ; et
si lesdits bits (b0, b1, b2) de compteur de multiplet de données appartiennent à une deuxième série, alors ledits bits de compteur de multiplet de données contiennent une information représentant un nombre qui doit être décodé avant qu'un nombre envisagé de multiplets (24, 25) de données, soit obtenu.

**28.** Système d'ordinateur pour recevoir une information dans une unité secondaire (7), comprenant :

- un moyen pour recevoir un multiplet d'ordre (20) comprenant des bits (b0, b1, b2) de compteur de multiplet de données ; et
- un moyen pour recevoir un nombre de multiplets de données ;

**caractérisé par** un moyen pour déterminer le nombre de multiplets de données en fonction de l'ensemble de règles suivant :

si lesdits bits (b0, b1, b2) de compteur de multiplet de données appartiennent à une première série, alors lesdits bits de compteur de multiplet de données contiennent une information représentant un nombre de multiplets associés (24, 25) de données qui est un nombre envisagé de multiplets de données ; et
si lesdits bits (b0, b1, b2) de compteur de multiplet de données appartiennent à une deuxième série, alors ledits bits de compteur de multiplet de données contiennent une information représentant un nombre qui doit être décodé avant qu'un nombre envisagé de multiplets (24, 25) de données, soit obtenu.

**29.** Système d'ordinateur pour envoyer une information à partir d'une unité principale (1), comprenant :

- un moyen pour envoyer un multiplet d'ordre (20) comprenant des bits (b0, b1, b2) de compteur de multiplet de données ;
- un moyen pour envoyer un nombre de multiplets de données (24, 25) ;

**caractérisé par** un moyen pour déterminer le nombre de multiplets de données en fonction de l'ensemble de règles suivant :

si lesdits bits (b0, b1, b2) de compteur de multiplet de données appartiennent à une première série, alors lesdits bits de compteur de multiplet de données contiennent une information représentant un nombre de multiplets associés (24, 25) de données qui est le nombre de multiplets de données à envoyer ; et
si lesdits bits (b0, b1, b2) de compteur de multiplet de données appartiennent à une deuxième série, alors ledits bits de compteur de multiplet de données contiennent une information représentant un nombre qui doit être codé avant qu'un nombre de multiplets (24, 25) de données à envoyer, soit obtenu.

FIG. 1

## Command Byte

| Data Byte Counter | | | Message Counter | Command | | | |
|---|---|---|---|---|---|---|---|
| b0 | b1 | b2 | b3 | b4 | b5 | b6 | b7 |

FIG. 2

FIG. 3

Command byte

Data bytes

FIG. 4

40

Start

41

Read command
byte from FIFO

42

Send command
byte

43

No_DB = 6 —— T

F

44

No_DB = 7 —— T —— read one data byte
from FIFO

47

F

45

read No_DB data
bytes from FIFO

48

send data byte

46

send No_DB data
bytes

FIG. 5

FIG. 6

FIG. 7